# FASCICULE DE BREVET EUROPEEN

(11) **EP 2 352 908 B1**
(45) Date de publication et mention de la délivrance du brevet: **16.05.2012**
(21) Numéro de dépôt: 09748373.9
(22) Date de dépôt: 29.09.2009
(51) Int. Cl.: F01D 25/18, B01D 45/14, F01M 13/04

(54) **ROTOR DESHUILEUR POUR TURBOMACHINE.**
ÖLABSCHEIDERROTOR FÜR EINE TURBOMASCHINE
OIL SEPARATOR ROTOR FOR TURBOMACHINE

(30) Priorité: 24.10.2008 FR 0805934
(43) Date de publication de la demande: 10.08.2011
(73) Titulaire: Snecma, 75015 Paris (FR)
(72) Inventeur: DEJAUNE, Claude, Gérard, René, F-77350 Boissise la Bertrand (FR); LORO, Gaël, F-77380 Combs la Ville (FR)
(74) Mandataire: Ramey, Daniel
(86) Numéro de dépôt international: PCT/FR2009/001163
(87) Numéro de publication internationale: WO 2010/046551

(56) Documents cités:
- EP-A- 0 780 546
- WO-A-02/36240
- FR-A- 2 299 898
- US-A- 6 033 450

## Description

La présente invention concerne un rotor déshuileur pour une turbomachine telle qu'un turboréacteur ou un turbopropulseur d'avion.

Le document WO-A-0 236 240 décrit un séparateur air/huile pour turbomachine.

Un rotor déshuileur de ce type comporte un moyeu tubulaire définissant un conduit axial interne de passage de fluide et comprenant une collerette annulaire externe, et une coiffe annulaire ayant en section une forme sensiblement en L qui est montée autour du moyeu. Cette coiffe comporte une paroi radiale qui est parallèle à la collerette du moyeu et qui est reliée à sa périphérie externe à une extrémité axiale d'une paroi cylindrique qui s'étend axialement jusqu'à la périphérie externe de la collerette.

La coiffe délimite avec la collerette du moyeu une chambre annulaire qui est en communication fluidique avec le passage interne du moyeu par des lumières radiales de ce dernier. Des moyens de dépôt d'huile par centrifugation sont logés dans cette chambre.

Ce rotor déshuileur est monté sur un élément du rotor de la turbomachine, en général à l'extrémité aval d'un tube de dégazage, et est destiné à séparer l'huile de l'air d'un mélange air/huile, cette huile étant ensuite récupérée par des moyens appropriés en vue de son recyclage. Le mélange air/huile se présente sous la forme d'un brouillard d'huile, c'est-à-dire d'air dans lequel des gouttelettes d'huile sont dispersées et en suspension. La séparation de l'huile est notamment obtenue par centrifugation de l'huile sous l'effet de la rotation du rotor déshuileur.

Dans un cas particulier, en fonctionnement de la turbomachine, le mélange air/huile s'écoule à l'intérieur du tube de dégazage et pénètre dans le passage interne du moyeu du rotor déshuileur par son extrémité amont. So us l'effet des forces centrifuges, les gouttelettes d'huile sont sollicitées radialement vers l'extérieur. Lorsqu'elles arrivent au niveau des lumières radiales du moyeu, elles passent par centrifugation dans ces lumières et pénètrent alors dans la chambre annulaire du rotor déshuileur, dans laquelle elles sont forcées de se déposer sur les moyens de dépôt d'huile logés dans la chambre. L'huile est ensuite évacuée radialement vers l'extérieur à travers des ouvertures de la paroi cylindrique de la coiffe, et l'air asséché en huile sort par l'extrémité aval du passage interne du moyeu.

On connaît un rotor déshuileur dont la coiffe est fixée sur la collerette du moyeu par des vis qui traversent axialement la chambre annulaire de logement des moyens de dépôt d'huile. Ces vis passent dans des orifices de la paroi radiale de la coiffe et de la collerette du moyeu et sont entourées par des entretoises qui les isolent des moyens de dépôt d'huile. Les vis de fixation de la coiffe s'étendent alors dans l'espace annulaire de la chambre occupé par les moyens de dépôt d'huile, ce qui encombre cet espace et peut perturber la récupération de l'huile, les moyens de dépôt d'huile pouvant être écrasés plus ou moins par les vis.

Par ailleurs, l'extrémité libre de la paroi cylindrique de la coiffe est en appui radial vers l'intérieur sur la périphérie externe de la collerette. Dans cette configuration, cette extrémité libre de la coiffe forme des moyens de centrage de la collerette du moyeu. En fonctionnement, sous l'effet des forces centrifuges, l'extrémité libre de la paroi cylindrique de la coiffé a tendance à s'ovaliser en se déformant localement vers l'extérieur. Il y a dans ce cas un risque de fuite incontrôlée d'huile vers l'extérieur de la chambre.

On connaît également un rotor déshuileur dont la coiffe est fixée sur le moyeu par frettage, la périphérie interne de la paroi radiale de la coiffe étant serrée sur le moyeu. Pour éviter les problèmes précités liés à l'ovalisation de l'extrémité aval de la coiffe, cette extrémité est soudée sur la périphérie externe de la collerette par au moins trois cordons de soudure, régulièrement répartis autour de l'axe longitudinal du rotor.

Cependant, dans ce cas, la coiffe est fixée sur le moyeu de telle façon qu'il est difficile de la démonter. Par ailleurs, on a constaté que les cordons de soudure ne sont pas une bonne solution au problème précité car ils font l'objet de concentrations de contraintes importantes qui font apparaître des criques ou des fissures dans ces cordons. Il y a alors un risque important de désengagement de la coiffe du moyeu, le frettage de la coiffe pouvant s'avérer insuffisant pour retenir cette pièce sur le moyeu du rotor déshuileur.

Les cordons de soudure criqués ou fissurés peuvent être réparés par une nouvelle opération de soudure. Cependant, les zones de soudure de la coiffe et de la collerette sont très sollicitées thermiquement à chaque opération de soudure, ce qui peut réduire leur durée de vie.

L'invention a notamment pour but d'apporter une solution simple, économique et efficace à au moins une partie des problèmes précités de la technique antérieure.

Elle propose à cet effet un rotor déshuileur pour turbomachine, comportant un moyeu tubulaire définissant un passage axial interne de fluide et comprenant une collerette annulaire externe, et une coiffe annulaire montée autour du moyeu, cette coiffe comprenant une paroi radiale et une paroi cylindrique qui délimite avec la collerette annulaire du moyeu une chambre annulaire qui communique avec le passage interne du moyeu et dans laquelle sont logés des moyens de dépôt d'huile par centrifugation, caractérisé en ce que la collerette annulaire du moyeu comporte à sa périphérie externe des moyens de retenue radiale de l'extrémité de la paroi cylindrique de la coiffe, de façon à centrer cette extrémité et à l'empêcher de se déformer en direction radiale vers l'extérieur sous l'effet des forces centrifuges, et en ce que la partie périphérique interne de la paroi radiale de la coiffe est en appui axial et est fixée par des moyens du type vis-écrou sur le moyeu, à distance de la collerette.

Selon l'invention, la collerette du moyeu retient mécaniquement l'extrémité de la paroi cylindrique de la coiffe, au contraire de la technique antérieure où l'extrémité de la paroi cylindrique de la coiffe est fixée extérieurement sur la collerette du moyeu.

Les moyens de retenue de la collerette s'étendent autour de l'extrémité de la paroi cylindrique de la coiffe et empêchent celle-ci de se déformer radialement vers l'extérieur sous l'effet des forces centrifuges. L'extrémité de la paroi cylindrique de la coiffe est en appui radial vers l'extérieur sur les moyens de retenue, et ce localement, dans des zones réparties autour de l'axe longitudinal du rotor déshuileur, ou en continu sur une circonférence centrée sur cet axe.

La coiffe est fixée de manière amovible sur le moyeu, ce qui facilite son démontage, en vue par exemple d'une opération de nettoyage ou de remplacement des moyens de dépôt d'huile du rotor déshuileur.

Les moyens de fixation sont situés au niveau de la partie périphérique interne de la coiffe et ne sont donc pas situés dans l'espace annulaire radialement externe de la chambre qui est occupé par les moyens de dépôt d'huile. Ces moyens de fixation relient la coiffe directement au corps tubulaire du moyeu et non pas à sa collerette, ils ne traversent donc pas axialement de part en part la chambre et ne perturbent pas la récupération de l'huile.

La périphérie externe de la collerette du moyeu peut comprendre un rebord cylindrique s'étendant axialement vers la coiffe autour de l'extrémité de la paroi cylindrique de la coiffe. Ce rebord cylindrique s'étend radialement à l'extérieur de l'extrémité de la paroi cylindrique de la coiffe, et comprend des moyens annulaires d'appui radial sur cette extrémité.

En variante ou en caractéristique additionnelle, la périphérie externe de la collerette du moyeu comprend des languettes à orientation circonférentielle faisant saillie axialement vers la coiffe autour de l'extrémité de la paroi cylindrique de la coiffe. Ces languettes sont situées radialement à l'extérieur de l'extrémité de la paroi cylindrique de la coiffe et comprennent chacune des moyens d'appui radial sur cette extrémité.

Ces languettes sont préférentiellement régulièrement réparties autour de l'axe longitudinal du rotor déshuileur. Chacune de ces languettes est alignée avec une bande longitudinale de matière de la paroi cylindrique de la coiffe, les bandes de matière de la coiffe délimitant entre elles des ouvertures de sortie d'huile. Le nombre de ces languettes est de préférence égal au nombre de bandes de matière précités et est par exemple de six.

La partie périphérique interne de la paroi radiale de la coiffe peut comprendre des moyens d'appui axial sur une bride annulaire externe ou des pattes radiales externes du moyeu, cette bride ou ces pattes comportant des orifices axiaux alignés avec des orifices de la paroi radiale de la coiffe pour le passage des vis de fixation de la coiffe.

Les moyens d'appui axial de la coiffe permettent de bloquer axialement cette coiffe dans une direction. La paroi cylindrique de cette coiffe peut en outre comprendre à son extrémité aval des moyens d'appui axial sur la périphérie externe de la collerette du moyeu, dans cette même direction. La coiffe est bloquée axialement dans la direction opposée grâce aux moyens de fixation précités.

Préférentiellement, les moyens de fixation du type vis-écrou sont au nombre de trois régulièrement répartis autour de l'axe longitudinal du rotor. Ils sont donc relativement peu nombreux pour limiter leur masse.

Les moyens de fixation peuvent comprendre des écrous sertis dans des orifices de la bride ou des pattes du moyeu, et coopérant avec des vis engagées axialement depuis l'extérieur de la chambre dans les orifices de la coiffe.

La paroi radiale de la coiffe peut comprendre à sa périphérie interne un rebord cylindrique de centrage de la coiffe sur le moyeu.

L'invention concerne également une turbomachine, telle qu'un turboréacteur ou un turbopropulseur d'avion, caractérisée en ce qu'elle comprend au moins un rotor déshuileur du type précité.

L'invention sera mieux comprise et d'autres détails, caractéristiques et avantages de la présente invention apparaîtront plus clairement à la lecture de la description qui suit, faite à titre d'exemple non limitatif et en référence aux dessins annexés, dans lesquels :
- la figure 1 est une vue schématique en perspective d'un rotor déshuileur de turbomachine selon la technique antérieure, vu de l'amont et de côté,
- la figure 2 est une demi-vue schématique en coupe axiale du rotor déshuileur de la figure 1,
- la figure 3 est une vue schématique en perspective d'un rotor déshuileur de turbomachine selon l'invention, vu de l'aval et de côté,
- la figure 4 est une demi-vue schématique en coupe axiale du rotor déshuileur de la figure 3,
- la figure 5 est une vue schématique en perspective éclatée du rotor déshuileur de la figure 3, vu de l'amont et de côté, et
- la figure 6 est une vue schématique en perspective du moyeu du rotor déshuileur de la figure 3, vu de l'aval et de côté.

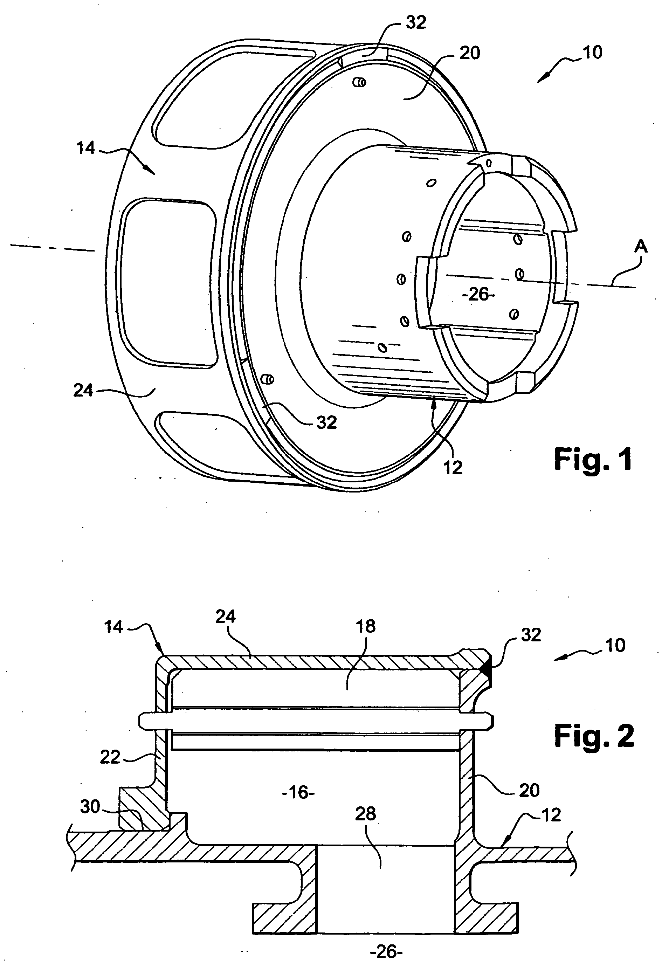

On se réfère d'abord aux figures 1 et 2 qui représentent un rotor déshuileur 10 pour turbomachine, selon la technique antérieure, ce rotor déshuileur 10 comportant pour l'essentiel un moyeu tubulaire 12 définissant un passage axial interne 26 alimenté par un mélange air/huile, et une coiffe annulaire 14 qui est montée autour du moyeu et qui délimite avec celui-ci une chambre annulaire 16 de logement de moyens 18 de dépôt d'huile par centrifugation.

Le moyeu 12 comprend une collerette annulaire 20 s'étendant sensiblement radialement vers l'extérieur par rapport à l'axe longitudinal A du moyeu, cet axe A étant confondu avec l'axe de rotation du rotor déshuileur 10.

La collerette 20 est située à distance des extrémités axiales du moyeu, et est par exemple située sensiblement au milieu du moyeu.

La coiffe 14 a en section une forme sensiblement en L et comprend une paroi radiale 22 reliée à sa périphérie externe à une extrémité axiale d'une paroi cylindrique 24.

La coiffe 14 est montée autour du moyeu 12 de façon à ce que cette paroi radiale 22 soit en appui par sa périphérie interne sur le corps du moyeu et s'étende parallèlement et à distance de la collerette 20 du moyeu, et que la paroi cylindrique 24 de la coiffe soit en appui radial vers l'intérieur sur la périphérie externe de la collerette 20.

La coiffe 14 délimite avec la collerette 20 la chambre annulaire 16 précitée qui est en communication fluidique avec le passage interne 26 du moyeu par des lumières radiales 28 formées dans le corps du moyeu 12.

La coiffe 14 est fixée sur le moyeu 12 par frettage et soudage. La coiffe 14 est frettée en 30 par la périphérie interne de sa paroi radiale 22 sur le corps du moyeu, et est fixée sur la collerette 20 par des cordons de soudure 32 entre l'extrémité libre de sa paroi radiale 24 et la périphérie externe de la collerette 20.

Ce rotor déshuileur 10 présente les inconvénients décrits plus haut, en particulier du fait que sa coiffe 14 n'est pas démontable et que des criques ou fissures peuvent apparaître sur les cordons de soudure 32 qui sont soumis en fonctionnement à des contraintes importantes du fait des forces centrifuges.

L'invention permet de remédier à ces problèmes grâce à des moyens de retenue de l'extrémité libre de la paroi cylindrique de la coiffe, portés par la collerette du moyeu, et à des moyens de fixation amovible de la coiffe sur le moyeu, qui ne perturbent pas la récupération de l'huile.

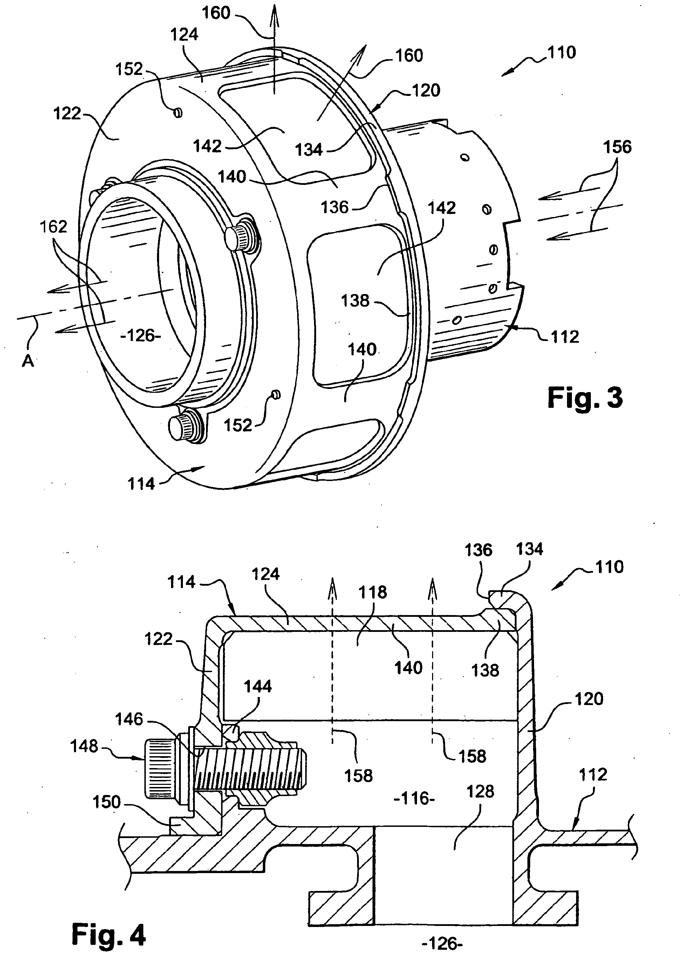

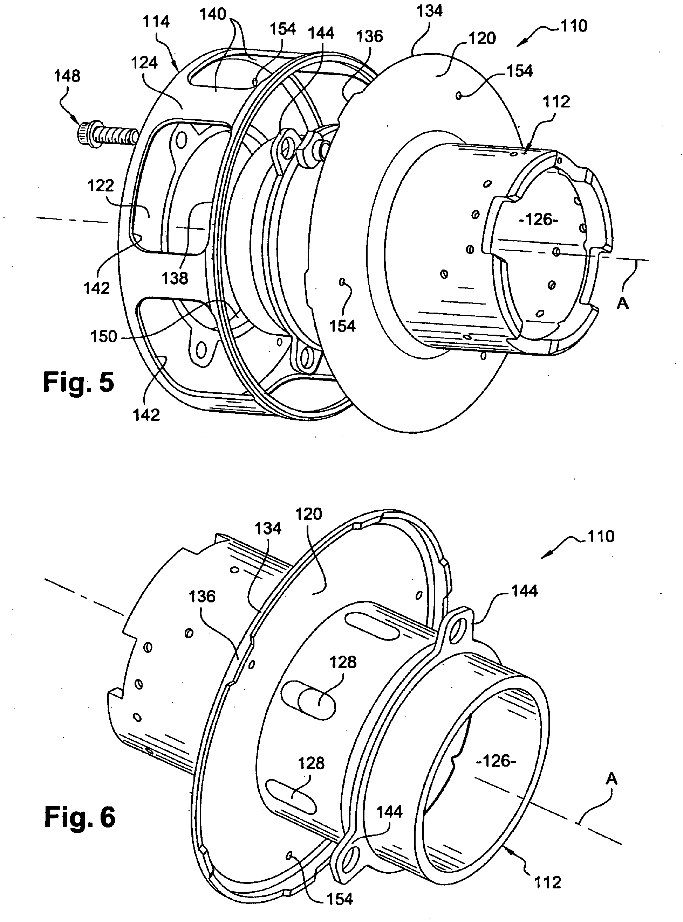

Dans l'exemple de réalisation représenté aux figures 3 à 6, les éléments déjà décrits en référence aux figures 1 et 2 sont décrits par les mêmes chiffres augmentés d'une centaine.

La collerette 120 du moyeu 112 diffère de celle du moyeu 12 en ce qu'elle comprend à sa périphérie externe un rebord cylindrique 134 orienté vers la coiffe 122. Des languettes 136 à orientation circonférentielle font en outre saillie axialement vers la coiffe 114 depuis l'extrémité libre du rebord 134.

Ces languettes 136 sont régulièrement réparties autour de l'axe A de rotation du rotor 110 et sont au nombre de six dans l'exemple représenté.

Le rebord 134 et les languettes 136 de la collerette 120 forment des moyens de centrage de l'extrémité libre de la paroi cylindrique 124 de la coiffe 114 et de retenue radialement vers l'extérieur de cette extrémité.

Le rebord 134 et/ou les languettes 136 comprennent des moyens d'appui radialement vers l'intérieur sur cette extrémité libre de la paroi cylindrique 124 de la coiffe 114.

Dans l'exemple représenté, la partie d'extrémité aval de la paroi cylindrique 124 de la coiffe est formée par un anneau 138 qui est relié à la partie d'extrémité opposée de la paroi 124 par des bandes longitudinales de matière 140 qui s'étendent parallèlement entre elles et qui sont régulièrement réparties autour de l'axe A.

Ces bandes de matière 140 délimitent entre elles des ouvertures radiales 142 de sortie d'huile, comme cela sera expliqué plus en détail dans ce qui suit. La coiffe 112 est montée sur le moyeu 112 de façon à ce que chaque languette 136 soit alignée avec une bande de matière 140.

La coiffe 122 est fixée sur le moyeu 112 par l'intermédiaire de la partie périphérique interne de sa paroi radiale 122. La partie périphérique interne de la paroi radiale 122 est en appui axial sur des pattes 144 qui s'étendent radialement vers l'extérieur depuis un rebord annulaire externe du moyeu.

Ces pattes 144 sont à distance axiale de la collerette 120, cette distance correspondant sensiblement à la longueur ou dimension axiale de la paroi cylindrique 124 de la coiffe. Des lumières radiales traversantes 128 de passage d'huile par centrifugation sont formées dans la paroi du corps du moyeu, entre la collerette 120 et les pattes 144.

La paroi radiale 122 comprend des orifices axiaux 146 qui sont alignés avec des orifices des pattes 144 pour le passage des moyens de fixation amovible qui sont ici des moyens 148 du type vis-écrou.

Le nombre de ces moyens 148 est égal au nombre de pattes de fixation 144 qui est égal à trois dans l'exemple représenté. Ces moyens 148 sont régulièrement répartis autour de l'axe A pour limiter la formation d'un balourd en fonctionnement.

Dans l'exemple représenté, chaque moyen 148 comprend une vis et un écrou serti dans l'orifice de la patte 144. Cet écrou est logé à l'intérieur de la chambre 116 et est disposé radialement à l'intérieur de l'espace annulaire de la chambre occupée par les moyens 118 de dépôt d'huile.

Chaque vis est engagée axialement dans l'orifice 146 correspondant de la coiffe 114 puis est vissée dans l'écrou au moyen d'un outil approprié manipulé à l'extérieur de la chambre 116.

L'écrou est empêché de se déplacer en rotation autour de son axe par coopération de formes avec le rebord cylindrique externe précité du moyeu 112.

La paroi radiale 122 de la coiffe comprend en outre à sa périphérie interne un rebord cylindrique 150 destiné à coopérer avec la surface cylindrique extérieure du corps du moyeu 112 pour assurer le centrage de cette paroi 122 de la coiffe.

Les moyens 118 de dépôt d'huile occupent une partie annulaire radialement externe de la chambre 116. Ils comprennent par exemple une cartouche annulaire sectorisée du type en nid d'abeille. Les alvéoles du nid d'abeille s'étendent dans l'exemple représenté en direction radiale par rapport à l'axe A, de façon à autoriser le passage d'huile depuis la chambre 116 jusqu'aux ouvertures 142 de la paroi cylindrique 124 de la coiffe, sous l'effet des forces centrifuges. Chaque secteur de cartouche comprend à ses extrémités axiales des doigts de montage 152 engagés dans des trous 154 de la collerette 120 et de la paroi radiale 122 de la coiffe, respectivement.

Le rotor déshuileur 110 selon l'invention peut être assemblé de la façon suivante : les secteurs de cartouche sont montés à l'intérieur de la coiffe 120 de sorte que leurs doigts 152 soient engagés dans les trous 154 de la paroi radiale 122 de la coiffe. La coiffe 120 est alignée axialement avec le moyeu 112, et la coiffe et le moyeu sont calés angulairement l'un par rapport à l'autre de façon à ce que les orifices 146 de la coiffe soient alignés axialement avec les orifices des pattes 144 du moyeu. La coiffe 120 est ensuite déplacée axialement vers le moyeu jusqu'à ce qu'elle vienne en appui par sa paroi radiale 122 sur les pattes 144 et par l'extrémité libre de sa paroi cylindrique sur la collerette 120, et que le rebord cylindrique 134 de la collerette soit en appui radial vers l'intérieur sur l'extrémité libre de la paroi 124 de la coiffe.

Dans cette position, les doigts 152 des secteurs de cartouche, situés du côté opposé aux pattes, sont engagés dans les trous 154 correspondants de la collerette 120. Les vis des moyens 148 sont alors vissées dans les écrous sertis pour verrouiller l'ensemble.

Ce rotor déshuileur 110 est particulièrement adapté mais non exclusivement à être fixé sur l'extrémité aval d'un tube de dégazage d'une turbomachine telle qu'un turboréacteur ou un turbopropulseur d'avion. Dans ce cas, le rotor déshuileur 110 fonctionne de la façon suivante : le tube de dégazage permet d'acheminer un mélange d'air et d'huile jusqu'au rotor déshuileur. Sous l'effet des forces centrifuges, les gouttelettes d'huile du mélange sont sollicitées vers l'extérieur. Le mélange air/huile pénètre dans le passage interne 126 du rotor déshuileur par son extrémité amont qui est l'extrémité du moyeu 112 opposée à la coiffe 114 par rapport à la collerette 120 (flèche 156 en figure 3). Lorsque les gouttelettes d'huile parviennent au niveau des lumières radiales 128 du moyeu, elles sont évacuées radialement vers l'extérieur à travers ces lumières par centrifugation et arrivent dans la chambre annulaire 116. Ces gouttelettes d'huile pénètrent ensuite dans les alvéoles des secteurs de cartouche en nid d'abeille et se déposent sur les parois de ces alvéoles. Elles sont acheminées radialement vers l'extérieur sous l'effet des forces centrifuges (flèche 158 en figure 4). Lorsque les gouttelettes arrivent à la périphérie externe de la cartouche 118, elles sont éjectées vers l'extérieur à travers les ouvertures 142 de la paroi 124 de la coiffe (flèche 160 en figure 3) et sont récupérées par un collecteur d'huile de la turbomachine. L'air asséché en huile s'écoule à l'intérieur du passage 126 du rotor déshuileur et en sorte par son extrémité aval (flèche 162).

Dans l'exemple décrit ci-dessus, le rotor déshuileur 110 est alimenté par un mélange air/huile via une extrémité du passage interne 126 du moyeu et les gouttelettes d'huile sont récupérées par centrifugation dans la chambre 114 puis passent radialement de l'intérieur vers l'extérieur à travers les moyens 118 de dépôt d'huile et les ouvertures 142 de la coiffe 114. Ce type de rotor déshuileur est dit radial notamment car l'écoulement de l'huile a lieu en direction radiale à travers les moyens de dépôt d'huile.

Cependant, l'invention n'est pas limitée à ce type de rotor déshuileur et peut également être appliquée à un rotor déshuileur axial, tel que décrit par exemple dans le document FR-A1-2 742 804 de la demanderesse. Dans un rotor déshuileur axial, l'huile s'écoule dans la chambre en direction axiale à travers les moyens de dépôt d'huile. Ce rotor déshuileur peut être alimenté par le mélange air/huile via des orifices de la paroi radiale de la coiffe. A la sortie des moyens de dépôt, l'huile peut être expulsée radialement vers l'extérieur à travers des ouvertures de la paroi cylindrique de la coiffe, et l'air asséché en huile peut passer à travers les lumières du moyeu et s'écouler ensuite à l'intérieur du passage interne du moyeu.

## Revendications

1. Rotor déshuileur (110) pour turbomachine, comportant un moyeu tubulaire (112) définissant un passage axial interne (126) de fluide et comprenant une collerette annulaire externe (120), et une coiffe annulaire (114) montée autour du moyeu, cette coiffe comprenant une paroi radiale (122) et une paroi cylindrique (124) qui délimite avec la collerette annulaire (120) du moyeu une chambre annulaire (116) qui communique avec le passage interne du moyeu et dans laquelle sont logés des moyens (118) de dépôt d'huile par centrifugation, **caractérisé en ce que** la collerette annulaire du moyeu comporte à sa périphérie externe des moyens (134, 136) de retenue radiale de l'extrémité de la paroi cylindrique de la coiffe, de façon à centrer cette extrémité et à l'empêcher de se déformer en direction radiale vers l'extérieur sous l'effet des forces centrifuges, et **en ce que** la partie périphérique interne de la paroi radiale (122) de la coiffe (114) est en appui axial et est fixée par des moyens (148) du type vis-écrou sur le moyeu (112), à distance de la collerette (120).

2. Rotor déshuileur selon la revendication 1, **caractérisé en ce que** la périphérie externe de la collerette (120) du moyeu comprend un rebord cylindrique (134) s'étendant axialement vers la coiffe (114) autour de l'extrémité de la paroi cylindrique de la coiffe.

3. Rotor déshuileur selon la revendication 1 ou 2, **caractérisé en ce que** la périphérie externe de la collerette (120) du moyeu comprend des languettes (136) à orientation circonférentielle faisant saillie axialement vers la coiffe (114) autour de l'extrémité de la paroi cylindrique de la coiffe.

4. Rotor déshuileur selon la revendication 3, **caractérisé en ce que** les languettes (136) sont régulièrement réparties autour de l'axe longitudinal (A) du rotor déshuileur.

5. Rotor déshuileur selon la revendication 3 ou 4, **caractérisé en ce que** chaque languette (136) est alignée avec une bande longitudinale de matière (140) de la paroi cylindrique (124) de la coiffe (114), les bandes de matière de la coiffe délimitant entre elles des ouvertures (142) de sortie d'huile.

6. Rotor déshuileur selon l'une des revendications précédentes, **caractérisé en ce que** la partie périphérique interne de la paroi radiale (122) de la coiffe (114) comprend des moyens d'appui axial sur une bride annulaire externe ou des pattes radiales externes (144) du moyeu (112), cette bride ou ces pattes comportant des orifices axiaux alignés avec des orifices (146) de la paroi radiale de la coiffe pour le passage des vis (148) de fixation de la coiffe.

7. Rotor déshuileur selon l'une des revendications précédentes, **caractérisé en ce que** les moyens de fixation (148) du type vis-écrou sont au nombre de trois et sont régulièrement répartis autour de l'axe longitudinal du rotor déshuileur.

8. Rotor déshuileur selon l'une des revendications précédentes, caractérisé en que les moyens de fixation (148) comprennent des écrous sertis dans les orifices de la bride ou des pattes (144) du moyeu (112) et coopérant avec des vis engagées axialement depuis l'extérieur de la chambre (116) dans des orifices (146) de la coiffe (114).

9. Rotor déshuileur selon l'une des revendications précédentes, **caractérisé en ce que** la paroi radiale (122) de la coiffe (114) comprend à sa périphérie interne un rebord cylindrique (150) de centrage de la coiffe sur le moyeu (112).

10. Turbomachine, telle qu'un turbopropulseur ou un turboréacteur d'avion, **caractérisée en ce qu'**elle comprend au moins un rotor déshuileur (110) selon l'une des revendications précédentes.

## Claims

1. A turbomachine oil-separator rotor (110) comprising a tubular hub (112) and an annular cap (114), the tubular hub (112) defining an internal axial passage (126) for fluid and including an outer annular collar (120), and the annular cap (114) being mounted around the hub, the cap comprising both a radial wall (122) and a cylindrical wall (124) that co-operates with the annular collar (120) of the hub to define an annular chamber (116) that communicates with the internal passage of the hub and that houses means (118) for depositing oil by centrifuging, the rotor being **characterized in that** the annular collar of the hub includes at its outer periphery means (134, 136) for retaining the end of the cylindrical wall of the hub radially so as to center said end and prevent it from deforming radially outwards under the effect of centrifugal forces, and **in that** the inner peripheral portion of the radial wall (122) of the cap (114) bears axially thereagainst and is fastened by nut-and-bolt type means (148) to the hub (112) at a distance from the collar (120).

2. An oil-separator rotor according to claim 1, **characterized in that** the outer periphery of the collar (120) of the hub has a cylindrical rim (134) extending axially towards the cap (114) around the end of the cylindrical wall of the cap.

3. An oil-separator rotor according to claim 1 or claim 2, **characterized in that** the outer periphery of the collar (120) of the hub includes circumferentially-extending tongues (136) projecting axially towards the cap (114) around the end of the cylindrical wall of the cap.

4. An oil-separator rotor according to claim 3, **characterized in that** the tongues (136) are regularly distributed around the longitudinal axis (A) of the oil-separator rotor.

5. An oil-separator rotor according to claim 3 or claim 4, **characterized in that** each tongue (136) is in alignment with a longitudinal strip of material (140) of the cylindrical wall (124) of the cap (114), the strips of material of the cap defining oil outlet openings (142) between one another.

6. An oil-separator rotor according to any preceding claim, **characterized in that** the inner peripheral portion of the radial wall (122) of the cap (114) includes means for bearing axially against an outer annular flange or outer radial tabs (144) of the hub (112), said flange or said tabs including axial orifices in alignment with the orifices (146) in the radial wall of the cap in order to pass cap fastener screws (148).

7. An oil-separator rotor according to any preceding claim, **characterized in that** the nut-and-bolt type fastener means (148) are three in number and are regularly distributed around the longitudinal axis of the oil-separator rotor.

8. An oil-separator rotor according to any preceding claim, **characterized in that** the fastener means (148) comprise nuts that are crimped in the orifices of the flange or of the tabs (144) of the hub (112) and that cooperate with bolts that are engaged axially from the outside of the chamber (116) into the orifices (146) in the cap (114).

9. An oil-separator rotor according to any preceding claim, **characterized in that** the radial wall (122) of the cap (114) includes a cylindrical rim (150) at its inner periphery for centering the cap on the hub (112).

10. A turbomachine such as an airplane turbojet or turboprop, the turbomachine being **characterized in that** it includes at least one oil-separator rotor (110) according to any preceding claim.

## Patentansprüche

1. Zentrifugalölabscheider (110) für Turbomaschinen, enthaltend eine rohrförmige Nabe (112), die einen axial verlaufenden Innendurchgang (126) für ein Fluid definiert und einen ringförmigen Außenkragen (120) aufweist, sowie eine um die Nabe herum montierte, ringförmige Kappe (114), wobei die Kappe eine radial verlaufende Wand (122) und eine zylindrische Wand (124) aufweist, die mit dem ringförmigen Kragen (120) der Nabe einen ringförmigen Raum (116) bildet, der mit dem Innendurchgang der Nabe kommuniziert und in welchem Mittel (118) zum Ablagern von Öl durch Zentrifugieren aufgenommen sind, **dadurch gekennzeichnet, dass** der ringförmige Kragen der Nabe an seinem Außenumfang Mittel (134, 136) zum radialen Festhalten des Endabschnitts der zylindrischen Wand der Kappe aufweist, so dass dieser Endabschnitt zentriert und daran gehindert wird, sich unter der Wirkung der Zentrifugalkraft in radialer Richtung nach außen zu verformen, und dass der innere Umfangsbereich der radial verlaufenden Wand (122) der Kappe (114) im Abstand von dem Kragen (120) sich axial an der Nabe (112) abstützt und über Mittel (148) vom Typ Schraube-Mutter daran befestigt ist.

2. Zentrifugalölabscheider nach Anspruch 1, **dadurch gekennzeichnet, dass** der Außenumfang des Kragens (120) der Nabe eine zylindrische Randleiste (134) aufweist, die sich axial zur Kappe (114) hin um den Endabschnitt der zylindrischen Wand der Kappe herum erstreckt.

3. Zentrifugalölabscheider nach Anspruch 1 oder 2, **dadurch gekennzeichnet, dass** der Außenumfang des Kragens (120) der Nabe Zungen (136) mit Umfangsausrichtung aufweist, die axial zur Kappe (114) hin um den Endabschnitt der zylindrischen Wand der Kappe herum vorspringen.

4. Zentrifugalölabscheider nach Anspruch 3, **dadurch gekennzeichnet, dass** die Zungen (136) gleichmäßig um die Längsachse (A) des Zentrifugalölabscheiders herum verteilt sind.

5. Zentrifugalölabscheider nach Anspruch 3 oder 4, **dadurch gekennzeichnet, dass** jede Zunge (136) mit einem longitudinalen Materialstreifen (140) der zylindrischen Wand (124) der Kappe (114) fluchtet, wobei die Materialstreifen der Kappe zwischen sich Öffnungen (142) zum Austritt von Öl eingrenzen.

6. Zentrifugalölabscheider nach einem der vorangehenden Ansprüche, **dadurch gekennzeichnet, dass** der innere Umfangsbereich der radial verlaufenden Wand (122) der Kappe (114) Mittel zur axialen Abstützung an einem ringförmigen, äußeren Flansch oder radial verlaufende, äußere Laschen (144) der Nabe (112) aufweist, wobei dieser Flansch bzw. diese Laschen axial verlaufende Öffnungen aufweisen, die mit Öffnungen (146) der radial verlaufenden Wand der Kappe für den Durchtritt der Schrauben (148) zum Befestigen der Kappe fluchten.

7. Zentrifugalölabscheider nach einem der vorangehenden Ansprüche, **dadurch gekennzeichnet, dass** die Befestigungsmittel (148) vom Typ Schraube-Mutter in einer Anzahl von drei vorliegen und gleichmäßig um die Längsachse des Zentrifugalölabscheiders verteilt sind.

8. Zentrifugalölabscheider nach einem der vorangehenden Ansprüche, **dadurch gekennzeichnet, dass** die Befestigungsmittel (148) Muttern aufweisen, die in die Öffnungen des Flansches oder der Laschen (144) der Nabe (112) eingebördelt sind und mit Schrauben zusammenwirken, die axial von außerhalb des Raums (116) in Öffnungen (146) der Kappe (114) eingreifen.

9. Zentrifugalölabscheider nach einem der vorangehenden Ansprüche, **dadurch gekennzeichnet, dass** die radial verlaufende Wand (122) der Kappe (114) an ihrem Innenumfang eine zylindrische Randleiste (150) zum Zentrieren der Kappe auf der Nabe (112) aufweist.

10. Turbomaschine, wie etwa Turbopropellertriebwerk oder Turbostrahltriebwerk für Flugzeuge, **dadurch gekennzeichnet, dass** sie zumindest einen Zentrifugalölabscheider (110) nach einem der vorangehenden Ansprüche aufweist.
